# EUROPEAN PATENT SPECIFICATION

(11) **EP 3 335 766 B1**
(45) Date of publication and mention of the grant of the patent: **05.04.2023**
(21) Application number: 16834594.0
(22) Date of filing: 03.08.2016
(51) Int. Cl.: A62C 37/50, A62C 13/76, A62C 13/00, G01F 23/02, B65D 25/54

(54) **FIRE EXTINGUISHER WITH CHECKING FUNCTION**
FEUERLÖSCHER MIT PRÜFFUNKTION
EXTINCTEUR D'INCENDIE AYANT UNE FONCTION DE VÉRIFICATION

(30) Priority: 13.08.2015 CN 201510498479
(43) Date of publication of application: 20.06.2018
(73) Proprietor: Tan, Choon Lye, 128528 (SG)
(72) Inventor: Tan, Choon Lye, 128528 (SG)
(74) Representative: González-Mogena González, Inigo
(86) International application number: PCT/CN2016/092992
(87) International publication number: WO 2017/024970

(56) References cited:
- WO-A1-03/024532
- CN-A- 104 998 364
- CN-U- 201 848 041
- CN-U- 204 864 638
- KR-A- 20010 090 046
- KR-A- 20120 105 125
- US-A- 2 112 924
- US-A- 2 917 924
- US-A- 3 675 722

## Description

### TECHNICAL FIELD

The invention relates to a fire extinguisher with a checking function for checking conditions of a fire extinguishing agent inside and a method of remotely checking the state of the tire extinguisher

### BACKGROUND OF THE INVENTION

The fire extinguisher is a light fire extinguishing tool, and can be used for fighting a primary fire and controlling its expansion. Different types of fire extinguishers are suitable for different types of fires, and the structure and the using method of the fire extinguishers are different. When the existing fire extinguishers are used, the situation of internal dry powder or the amount of the internal solution are not known, and thus the fire extinguishers cannot be discretely used according to fire behaviour, which may make no reasonable control on the fire tendency, hereby serious consequences may be possibly caused. The fire extinguisher needs to be periodically detected, mainly in terms of whether the internal dry powder of the fire extinguisher is condensed. However, the fire extinguisher with permanent pressure cannot be disassembled to check the dry powder, unless the pressure is released, the valve is taken out and then the fire extinguisher is reassembled and repressurized after checking. Therefore, there are some defects of the traditional fire extinguisher which cannot be remedied, for example, only a small part of the fire extinguisher, instead of the whole fire extinguisher, can be checked, otherwise it is must to perform weighing for checking whether the weight of the liquid extinguishing agent is reduced or detecting the weight, and which need consuming manpower and material resources and the like.

In the state of the art, the document US2917924 reveals a light permeable marker to be inserted into the aperture in the side wall of a fluid container for visually indicating the level of fluid under pressure in said container, said marker comprising a bracket having a main body portion cross sectionally substantially conforming to the aperture for insertion there through substantially into the container body, and having an end portion substantially greater cross sectionally than the aperture, the end portion of the bracket being positioned over the aperture and secured to the outer face of the container in overlying sealing relation to the aperture, and the main body portion of the bracket extending substantially inwardly of the container and being partially closed at the inner end thereof.

in the present invention, the cavity has a cambered surface mated with the checking component, a rubber ring mounted inside the groove and incorporated with the cambered surface to fix the checking component; while in the document US2917924, the maker is pressed against the inner end through the flange, and then fixing the flange through the retainer ring and disc member, so as to fix the maker, they are two different fixing manners, having different structures. In the present application, the checking component is a glass bead, having a spherical surface which can mate with the cambered surface of the cavity provided; however, in the document US2917924, the maker is not a glass bead.

The document US3675722 reveals a device for indicating pressure above or below a preselected value comprising: means forming a housing; means forming a disc disposed within said housing means and having a centrally disposed, domed portion movable from a normal convex position to a concave position in response to an increase of pressure above the preselected value applied inwardly of the domed portion in the normal convex position; means forming a translucent window overlying said disc means and having a surface disposed juxtaposition ally to said disc means partially frosted to form both clear and frosted areas and having a dished configuration formed complementary to said domed portion of said disc means; and means transmitting pressure to said domed portion of said disc means. In US3675722, the translucent viewing means presses against the annular shoulder of the housing, there is no cambered surface of the cavity and no rubber ring component mounted inside a groove for fixing the checking component. In the present application, the checking component is a transparent glass bead, having a spherical surface which can mate with the cambered surface of the cavity provided; however, in US3675722, the translucent viewing means is not a glass bead.

The document US2112924 relates to means for facilitating the inspection and determination of conditions within tanks, receptacles, and systems, where the combination with a portable fire extinguisher having its bottom wall set back from the bottom edges of its side walls and containing a fire extinguisher charge which is to be periodically renewed to maintain the extinguisher in a condition of maximum efficiency and which has a visible characteristic to indicate effectiveness, of an inspection window in the form of a light transmitting thimble shaped member supported by said bottom wall with the open end of the member communicating with the interior of the extinguisher to permit a part of said charge to enter the member, said member having a closed end extending below said bottom wall but within the limits of the extinguisher defined by said side wall and bottom edges, said closed end being suitably shaped at its periphery to permit illumination and inspection of the contents in said member from beyond said side wall bottom edges and along lines inclined with respect to the axis of the member but approximately normal to the surface at said periphery.

In the present invention a through hole is formed on the upper part of a side surface of the fire extinguisher body; while the opening in the document US2112924 is formed in the bottom. Also, in the present application, the cavity has a cambered surface mated with the checking component, a rubber ring is mounted inside the groove and is incorporated within the cambered surface to fix the checking component; while in US2112924, there is no cambered surface of the cavity and no rubber ring component mounted inside a groove for fixing the checking component, in particular the gaskets could merely be seen as a carrier ring.

In the present application, the checking component is a transparent glass bead, having a spherical surface which can mate with the cambered surface of the cavity provided; however, in US2112924, the member is not a glass bead.

### SUMMARY OF THE INVENTION

Aiming at solving the defects existing in the above-mentioned problems, the invention provides a fire extinguisher with a checking function for checking conditions of a fire extinguishing agent inside, comprising a fire extinguisher body (1), where a through hole is formed in an upper part of a side surface of the fire extinguisher body (1), a fixing seat (2) is mounted at the through hole, a cavity is machined inside the fixing seat (2), a checking component (5) is arranged inside the cavity; a groove (4) is formed at a front end of the cavity, a rubber ring (3) for fixing the checking component (5) is mounted inside the groove (4); the cavity has a cambered surface mated with the checking component (5); and the checking component (5) is made of a transparent glass bead.

The present invention also discloses a method of remotely checking the state of the tire extinguisher comprising the steps of taking a photo of the checking component, transmitting it through a network to a remote location together with an identification code of the tire extinguisher, and analyzing it at the remote location.

As a further improvement of the invention, a fixing sleeve for fixing the checking component is mounted outside the fixing seat, a fixing hole is formed at the front end of the fixing sleeve, and a cambered surface mated with the checking component is machined inside the fixing hole.

Preferably, the fixing seat is in threaded connection with the fixing sleeve.

Preferably, the fixing seat and the fixing sleeve are cylindrical.

Preferably, the checking component is a circular glass bead.

Preferably, the fixing seat and the edge of the through hole are welded.

The advantages of the invention exist in that the fixing seat is mounted on the fire extinguisher body, a fixing sleeve is mounted on the fixing seat, the glass bead is mounted at the internal cavity of the fixing seat and the fixing sleeve, the through hole is formed in the fire extinguisher body and the fixing seat is fixedly welded on the through hole; thus the fire extinguisher has many advantages such as the structure is simple, and it is convenient and efficient to check the fire extinguishing agents or liquid level and liquid weight inside the fire extinguisher, and the like.

### BRIEF DESCRIPTION OF THE DRAWINGS

Fig. 1 is a front view of the fire extinguisher with a checking function according to embodiment 1.
Fig. 2 is an enlarged schematic view of the position A in Fig. 1.
Fig. 3 is a second schematic structural view of the enlarged schematic view of the position A in Fig. 1.
Fig. 4 is a front view of the fire extinguisher with a checking function according to embodiment 2.
Fig. 5 is an enlarged schematic view of the position B in Fig. 4.
Fig. 6 is an enlarged schematic view of the position C in Fig. 5.
Fig. 7 is an enlarged schematic view of the position D in Fig. 4.
Fig. 8 is a front view of the fire extinguisher with a checking function according to embodiment 3.
Fig. 9 is an enlarged schematic view of the position E in Fig. 8.
Fig. 10 is an enlarged schematic view of the position F of Fig. 8.
Fig. 11 is an enlarged schematic view of the position G in Fig. 8.
In the figures: 1. fire extinguisher body; 2. fixing seat; 3. rubber ring; 4. groove; 5. checking component; 6. fixing sleeve; 7. hose; 8. connection valve; 9. needle valve; 10. filling valve; 11. connecting valve B; 12. floatings; 13. connecting valve C; 14. connecting valve D; 15. metal tube; 16. floating ball; 17. travel detector; 18. magnet.

### DETAILED DESCRIPTION OF THE EMBODIMENT

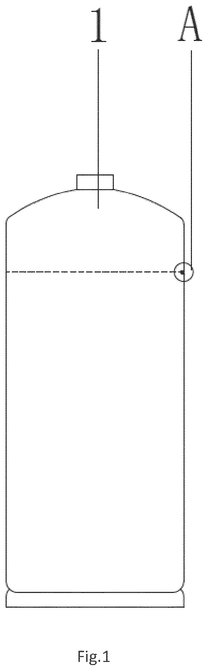

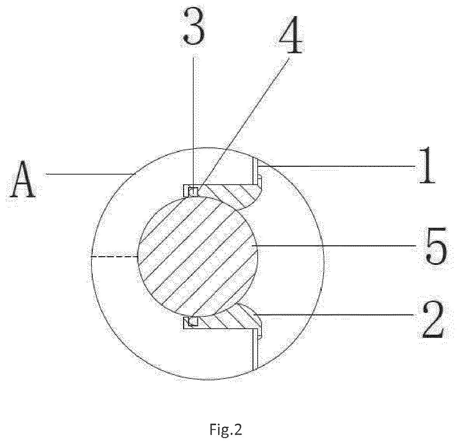

Embodiment 1, as shown in FIGs. 1-2, provides a fire extinguisher with a checking function. As shown in Fig. 1, the position of viewing the liquid level is determined at the liquid level when the bottle is erected, and the position of viewing the fluidity of dry powder is determined at the dry power position arranged at the lower part of the bottle body when the bottle is inverted and all of the dry powder falls to the position at the other end surface of the bottle body. The fire extinguisher comprises a fire extinguisher body 1, and a through hole is formed in the upper part of the side face of the fire extinguisher body 1, a fixing seat 2 is mounted at the through hole, a checking component 5 is arranged inside the fixing seat 2; a cavity is machined inside the fixing seat 2; a groove 4 is formed at the front end of the cavity, and a rubber ring 3 for fixing the checking component 5 is mounted inside the groove 4, a cambered surface mated with the checking component 5 is machined inside the fixing seat 2; the checking component 5 is a transparent glass bead

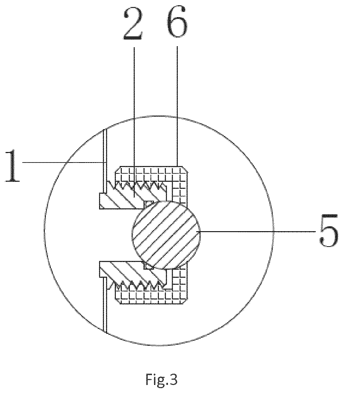

As shown in FIG. 3, a fixing sleeve 6 for fixing the checking component 5 is mounted outside the fixing seat 2, a fixing hole is machined at the front end of the fixing sleeve 6, a cambered surface mated with the checking component 5 is machined inside the fixing hole, the fixing seat 2 is in threaded connection with the fixing sleeve 6, and the fixing seat 2 and the fixing sleeve 6 are cylindrical, the checking component 5 is a circular glass sheet, and the fixing seat 2 and the edge of the through hole are welded.

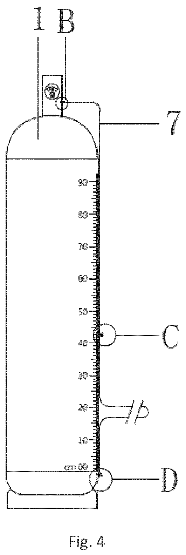

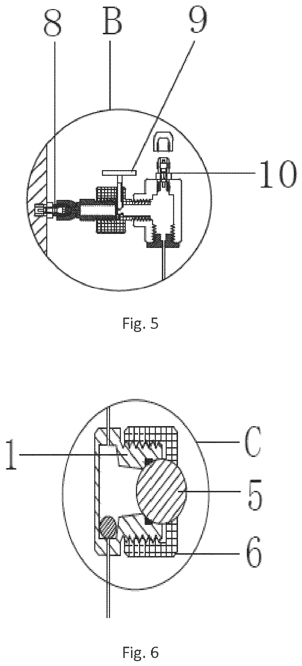

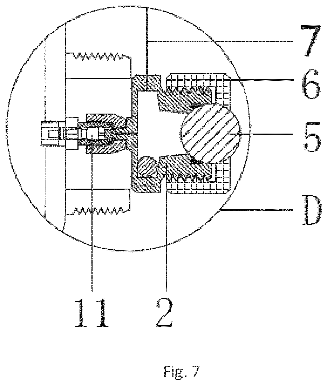

Embodiment 2, as shown in FIGs. 4-7, a hose 7 is arranged between the upper part and the lower side surface of the fire extinguisher body 1, a scale ruler is printed on the side surface of the fire extinguisher body 1, and the hose 7 is connected with the upper part of the fire extinguisher body 1 through a filling device, the filling device comprises a connecting valve A8 which is communicated with the fire extinguisher body 1, and a filling valve 10 communicated with the hose 7 is threadedly mounted at the front end of the connecting valve A8, and a needle valve 9 is mounted in the connecting valve A8. The hose 7 is communicated with the lower part of the side surface of the fire extinguisher body 1 through a connecting valve B11, the connecting valve B11 and the fire extinguisher body 1 are welded, a fixing seat 2 is mounted at the front end of the connecting valve B11 through a lower screw cap, and a fixing sleeve 6 is mounted outside through a bolt, a circular glass bead is mounted at the cavity of the middle of the fixing seat 2 and the fixing sleeve 6, and the lower end of the hose 7 is communicated with the side face of the fixing seat 2. The hose 7 penetrates through the floatable fixing seat, the fixing sleeve 6 is mounted on the fixing base 2 through threads, and the fixing sleeve 6 is mounted on the fixing base 2 through threads, the fixing seat 2 and the cavity of the fixing sleeve 6 are provided with glass beads for observation, and the glass marble beads used for observation are arranged on the cavity of the fixing seat 2 and the fixing sleeve 6, the rear part of the cavity is provided with a colored floating ball 16 or the liquid is intentionally dyed.

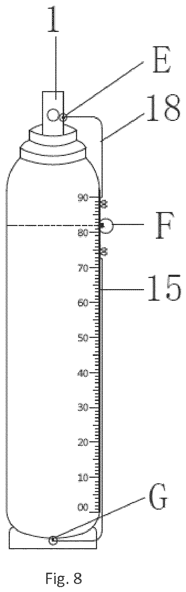

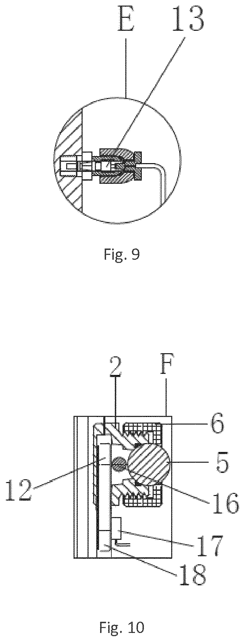

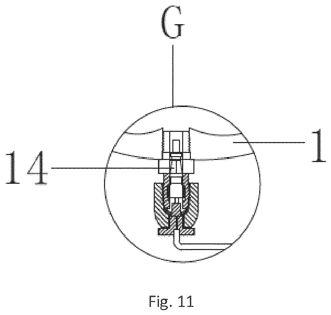

Embodiment 3, as shown in FIGs. 8 -11, a connecting valve C13 communicated with the side surface of the upper part of the fire extinguisher body 1 is mounted at the same, the middle of the lower surface of the fire extinguisher body 1 is provided with a connecting valve D14 communicated with the same. A metal tube 15 is mounted on the connecting valve C13 and the connecting valve D14, and the upper part of the metal tube 15 is machined into a spring shape, a lifting fixing seat 2 is mounted in the middle of the spring shape, a fixing sleeve 6 is mounted outside the fixing seat 2 through threads, and a glass bead 12 is mounted in a cavity between the fixing seat 2 and the middle of the fixing sleeve 6, and a glass bead 12 is mounted in a cavity in the middle of the fixing seat 2 and the fixing sleeve 6, a coloured floating ball 16 or floatings are mounted at the rear part of the cavity, or the glass bead 12 is intentionally dyed, a travel detector 17 and a magnet 18 are mounted at the lower portion of the fixing base 2.

The fire extinguisher according to the invention can be further subjected to remote checking, and is intended to be long-distance checking (such as transmission of photos and of the latest identification code over a network), particularly: an user can take a part of a display checking component of the fire extinguisher into a photo, then is transmitted to a distal engineer through a network together with the latest identification code on the fire extinguisher, and the engineer can know all information of the fire extinguisher after receiving the photos and the identification codes, for example: 1. the appearance condition of the fire extinguisher and the condition of whether the spray pipe is free of barrier; 2. the conditions of the fire extinguishing agent, and the position of the liquid level and whether the weight is sufficient accurately can be precisely informed if the fire extinguisher is a liquid fire extinguisher; and if the fire extinguisher is a dry powder fire extinguisher, it can be determined that whether the flowability of the dry powder is good or not, such information may be precisely transmitted to the custmor for confirmation. Meanwhile, engineers can master the use conditions of the sold fire extinguishers in time, know about the use behaviour of the product, and can clearly answer the problem of the user in time. After payment, the password is received, and the customer can obtain the qualified inspection report, so that convenience is provided for inspecting fire extinguishers which are mounted in the ships in the ocean navigation or ordinary buildings, and the users can use the fire extinguishers trustingly.

The above descriptions are only preferred embodiments of the present invention, and are not intented to limit the present invention, it will be apparent to those skilled in the art that various modifications and variations can be made in the present invention, which is defined in the appended claims.

## Claims

1. A fire extinguisher with a checking function for checking conditions of a fire extinguishing agent inside, comprising a fire extinguisher body (1), **characterized in that**:
a through hole is formed in an upper part of a side surface of the fire extinguisher body (1), a fixing seat (2) is mounted at the through hole, a cavity is machined inside the fixing seat (2), a checking component (5) is arranged inside the cavity; a groove (4) is formed at a front end of the cavity, a rubber ring (3) for fixing the checking component (5) is mounted inside the groove (4); the cavity has a cambered surface mated with the checking component (5); and the checking component (5) is made of a transparent glass bead.

2. The fire extinguisher with a checking function according to claim1, **characterized in that**, a fixing sleeve (6) for fixing the checking component (5) is mounted outside the fixing seat (2), a fixing hole is mechined in the front end of the fixing sleeve (6), and hereby a cambered surface mated with the checking component (5) is machined inside the fixing hole, wherein the fixing seat (2) and the fixing sleeve (6) are in threaded connection.

3. The fire extinguisher with a checking function according to claim 2, **characterized in that**, the fixing seat (2) and the fixing sleeve (6) are cylindrical.

4. The fire extinguisher with a checking function according to claim 1 or claim 2, **characterized in that**, the fixing seat (2) is welded with the edge of the through hole.

5. A method of remotely checking the state of the tire extinguisher of claims 1-4 comprising the steps of taking a photo of the checking component, transmitting it through a network to a remote location together with an identification code of the tire extinguisher, and analysing it at the remote location.

## Patentansprüche

1. Feuerlöscher mit einer Prüffunktion für die Prüfung des Zustandes eines sich darin befindlichen feuerlöschenden Mittels, umfassend einen Feuerlöscherkörper (1), **dadurch gekennzeichnet dass**:
ein Durchgangsloch in einem Oberteil einer Seitenfläche des Feuerlöscherkörpers (1) ausgebildet ist, ein Befestigungssitz (2) an dem Durchgangsloch angebracht ist, eine Vertiefung innerhalb des Befestigungssitzes (2) bearbeitet ist, ein Prüfbauteil (5) innerhalb der Vertiefung angeordnet ist; eine Rille (4) an einem Vorderende der Vertiefung ausgebildet ist, ein Gummiring (3) für die Befestigung des Prüfbauteils (5) innerhalb der Rille (4) angebracht ist; die Vertiefung eine mit dem Prüfbauteil (5) korrespondierende gewölbte Fläche hat; und das Prüfbauteil (5) aus einer transparenten Glasperle ausgebildet ist.

2. Feuerlöscher mit einer Prüffunktion nach Anspruch 1, **dadurch gekennzeichnet, dass** eine Befestigungshülse (6) für die Befestigung des Prüfbauteils (5) außerhalb des Befestigungssitzes (2) angebracht ist, ein Befestigungsloch in dem Vorderende der Befestigungshülse (6) bearbeitet ist, und dadurch eine mit dem Prüfbauteil (5) korrespondierende gewölbte Fläche innerhalb des Befestigungsloches bearbeitet ist, wobei der Befestigungssitz (2) und die Befestigungshülse (6) sich in einer Gewindeverbindung befinden.

3. Feuerlöscher mit einer Prüffunktion nach Anspruch 2, **dadurch gekennzeichnet, dass** der Befestigungssitz (2) und die Befestigungshülse (6) zylindrisch sind.

4. Feuerlöscher mit einer Prüffunktion nach Anspruch 1 oder Anspruch 2, **dadurch gekennzeichnet, dass** der Befestigungssitz (2) mit dem Rand des Durchgangsloches verschweißt ist.

5. Methode für die Fernprüfung des Zustandes des Feuerlöschers nach Ansprüchen 1-4, umfassend die Schritte ein Foto des Prüfbauteils zu machen, das Foto zusammen mit einem Identifizierungscode des Feuerlöschers über ein Netzwerk an einen Fernstandort zu übertragen, und es an dem Fernstandort zu analysieren.

## Revendications

1. Extincteur d'incendie avec une fonction de contrôle pour contrôler les conditions d'un agent extincteur d'incendie à l'intérieur, comprenant un corps d'extincteur d'incendie (1), **caractérisé en ce que** :
un trou traversant est formé dans une partie supérieure d'une surface latérale du corps d'extincteur d'incendie (1), un siège de fixation (2) est monté au niveau du trou traversant, une cavité est usinée à l'intérieur du siège de fixation (2), un composant de contrôle (5) est disposé à l'intérieur de la cavité ; une rainure (4) est formée à une extrémité avant de la cavité, un anneau en caoutchouc (3) pour fixer le composant de contrôle (5) est monté à l'intérieur de la rainure (4) ; la cavité a une surface cambrée couplée avec le composant de contrôle (5) ; et le composant de contrôle (5) est constitué d'une perle de verre transparente.

2. Extincteur d'incendie avec une fonction de contrôle selon la revendication 1, **caractérisé en ce que**, un manchon de fixation (6) pour fixer le composant de contrôle (5) est monté à l'extérieur du siège de fixation (2), un trou de fixation est usiné dans l'extrémité avant du manchon de fixation (6), et ainsi une surface cambrée couplée avec le composant de contrôle (5) est usinée à l'intérieur du trou de fixation, dans lequel le siège de fixation (2) et le manchon de fixation (6) sont en raccordement fileté.

3. Extincteur d'incendie avec une fonction de contrôle selon la revendication 2, **caractérisé en ce que**, le siège de fixation (2) et le manchon de fixation (6) sont cylindriques.

4. Extincteur d'incendie avec une fonction de contrôle selon la revendication 1 ou la revendication 2, **caractérisé en ce que**, le siège de fixation (2) est soudé avec le bord du trou traversant.

5. Procédé de contrôle à distance de l'état de l'extincteur d'incendie selon les revendications 1 à 4 comprenant les étapes consistant à prendre une photo du composant de contrôle, à la transmettre par le biais d'un réseau à un emplacement distant conjointement avec un code d'identification de l'extincteur d'incendie, et à l'analyser à l'emplacement distant.
